# EUROPEAN PATENT APPLICATION

(11) **EP 1 596 623 A2**
(43) Date of publication of application: **16.11.2005**
(21) Application number: 05252537.5
(22) Date of filing: 22.04.2005
(51) Int. Cl.: H04Q 7/38, G01C 21/20

(54) **Displaying location of a terminal for cellular wireless telecommunications**

(30) Priority: 10.05.2004 US 842132
(71) Applicant: LUCENT TECHNOLOGIES INC., Murray Hill, New Jersey 07974-0636 (US)
(72) Inventor: Samuel, Isaac, Swindon, Wiltshire SN5 5SH (GB)
(74) Representative: Sarup, David Alexander

(57) **Abstract**

A method is provided of providing location information to a user of a mobile user terminal for cellular wireless telecommunications having a visual display. In the method, the location of the mobile user terminal is determined using a satellite location system. Also, a call connection between the mobile user terminal and a remote server is made via a cellular wireless telecommunications network connected to the remote server. The remote server processes data of the location and data of a map so as to provide a set of data representing the location of the user on the map to the mobile user terminal. The remote server sends the set of data to the mobile user terminal. The mobile user terminal receives the data and displays the location of the user on the map.

## Description

### Field of the Invention

The present invention relates to telecommunications, in particular cellular wireless telecommunications.

### Description of the Related Art

Known satellite navigation systems can be useful. One known approach is to have a dedicated satellite positioning system installed in the vehicle, such as one including a Global Positioning System (GPS) receiver, a video display, and a compact disk (CD) player or Digital Video Disk (DVD) player. Maps are loaded into the system covering the area being travelled by means of the CD or DVD player. Such a system gives audible and visual instructions to a driver of a motor vehicle as to how to navigate a route, and can also indicate route diversions in the event of roadworks. Such systems can be expensive, and are difficult to install or remove.

### Summary of the Invention

The inventor found a way to navigate by using a mobile user terminal for cellular telecommunications.

An example of the present invention is a method of providing location information to a user of a mobile user terminal for cellular wireless telecommunications having a visual display. In the method, the location of the mobile user terminal is determined using a satellite location system. Also, a call connection is made between the mobile user terminal and a remote server via a cellular wireless telecommunications network connected to the remote server. The remote server processes data of the location and data of a map so as to provide a set of data representing the location of the user on the map to the mobile user terminal. The remote server sends the set of data to the mobile user terminal. The mobile user terminal receives the data and displays the location of the user on the map.

### Brief Description of the Drawings

An illustrative embodiment of the present invention will now be described by way of example and with reference to the drawings, in which:

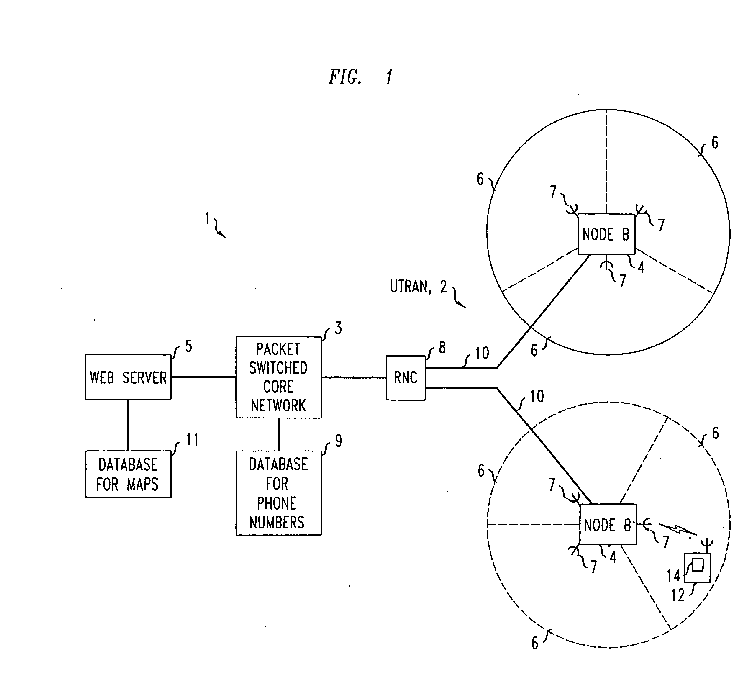

Figure 1 is a diagram illustrating a network including a UMTS network.

### Detailed Description

When considering a known system, the inventor realised that a mobile user terminal for wireless telecommunications could be used for navigation of the user by satellite, and could be used even without a vehicle.

### Network Structure

As shown in Figure 1, the network 1 is a packet switched core network 3 connected to a webserver 5, a phone number database 9, and a Universal Mobile Telecommunications System (UMTS) terrestrial access network (UTRAN) 2, which is a type of wideband code division multiple access (CDMA) network for mobile telecommunications. The webserver 5 is a computer which supplies a webpage image to a user identified by a user identifier (user ID) in one or more sessions, identified by a session identifier (session ID) for that user. The webserver 5 is connected to a map database 11 which stores maps for the whole world electronically.

The UTRAN network 2 is basically as shown in the right hand side of Figure 1. Only one radio network controller and two base stations of the UTRAN network 2 are shown for simplicity. As shown in this Figure, the UTRAN network 2 includes base stations 4. In the Figure, each of the base stations 4 is also designated "Node B" in accordance with UMTS terminology. A cell, also referred to as a sector, is the radio-coverage area served by a corresponding antenna of a base station. Each base station typically has three cells 6, each covered by one of three directional antennas 7 angled at 120 degrees to each other in azimuth. Each radio network controller (RNC) 8 typically controls several base stations 4 and hence a number of cells 6. A base station 4 is connected to its controlling radio network controller (RNC) 8 via a respective interface 10 known as an IuB interface. In use, a mobile user terminal 12 (often referred to as User Equipment (UE) in UMTS terminology) communicates with a serving radio network controller (RNC) 8 via at least one cell 6 of at least one base station 4. In that way, the mobile user terminal communicates with the UTRAN network 2.

### Mobile User Terminals

The mobile user terminals 12 are computers, such as professional digital assistants (PDAs) with UMTS telecommunications capability for high speed data and voice calls. Each mobile user terminal includes a visual display 14, in particular a large colour Liquid Crystal Diode (LCD) screen, for viewing of webpages.

### Operation

This can be considered as a sequence of steps, as follows:
(a) The mobile user terminal 12 is call connected via the UTRAN network 2 and packet switched core network 3 to the webserver 5, so that the user logs into the relevant website hosted by the webserver 5 using a user ID and password. The webserver defines a so-called session ID indicating that this is the only current call with this user, or which of several current calls between this website and this user this particular call is.
(b) The user enters a start address and a destination address for a journey into the webserver 5 via the call-connection. Upon selection of a country a specific map is loaded by the map database 11 onto the webserver 5.
(c) The webserver 5 sends the user ID to the packet switched core network 3 in a location request for the mobile user terminal. This is a request for the geographical location (Global Positioning System, GPS) coordinates of the mobile user terminal.
(d) The database 9 for phone numbers is inspected by the packet switched core network 3 to identify the mobile user terminal associated with the User ID in the location request so as know to which mobile user terminal to direct the location request.
(e) The request is passed to the UTRAN network 2 where an instruction is sent from the RNC 8 handling the call with the mobile user terminal for the mobile user terminal to send back its Global Positioning System (GPS) coordinates periodically at regular intervals.
(f) The GPS coordinates together with the user ID and session ID are passed via the UTRAN 2 and packet switched core network 3 to the webserver 5.
(g) The webserver 5 plots the GPS coordinates for the particular user on the map. In other words, an icon representing the location of the mobile user terminal is added to the webpage being viewed by that user on his/her mobile user terminal.
(h) The webserver 5 determines the shortest route to the destination from the current location and displays the route graphically on the map.
(i) From the current location and route information, the website generates an appropriate but simple audio message, e.g. "Take next right turn" or "Take next right turn onto Cartwright drive", which is passed to and output by the mobile user terminal as sound. Also related travel information is passed to the mobile user terminal and output as sound, such as how far the mobile user terminal is from the destination in distance and estimated time.
(j) Steps (f), (g) ,(h) and (i) above are repeated so that the webpage refreshes every few seconds so as to show an updated location of the mobile user terminal, a revised route and further audio messages as appropriate.

It is envisaged that such a method or system for navigation could be used by a user in a motor vehicle, for example with the mobile user terminal held in a cradle mounted on the dashboard of the vehicle. Alternatively, the user could use the same approach to navigate on foot.

Compared to known in-vehicle satellite navigation systems, the example embodiment has advantages that much processing is done on demand at the webserver so complex in-vehicle equipment is avoided. The user has no need to buy CDs or DVDs of map information. Also, the user of the example embodiment can transfer from vehicle to vehicle or go on foot. Also there are advantages of security as the mobile user terminal can be kept to hand when not in use rather than being left in a vehicle.

In an alternative embodiment (not shown) rather than the mobile user terminal providing its own Global Positioning System (GPS) coordinates (as per step e above) , the GPS location information is determined by triangulation from three appropriately spaced base station antennas. Knowing the locations of the base station antennas, measurements of respective time delays of signals to or from a mobile user terminal are made and reported to the radio network controller so as to calculate the location of the mobile user terminal.

### General

The present invention may be embodied in other specific forms without departing from its spirit or essential characteristics. For example, it could apply to mobile user terminals in other code division multiple access (CDMA) or wide-band CDMA systems, such as CDMA2000; or in time division multiple access systems; or in Global System for Mobiles (GSM) systems or Enhanced Datarates for GSM Evolution (EDGE) systems. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

## Claims

1. A method of providing location information to a user of a mobile user terminal for cellular wireless telecommunications having a visual display, by the steps of:
at a remote server:
receiving a location of the mobile user terminal determined using a satellite location system,
making a call connection with the mobile user terminal via a cellular wireless telecommunications network,
processing data of the location and data of a map so as to provide a set of data representing the location of the user on the map to the mobile user terminal,
sending the set of data to the mobile user terminal for display of the location of the user on the map.

2. A method according to claim 1, in which the cellular wireless telecommunications network and mobile user terminal operate by a code division multiple access (CDMA) method.

3. A method according to claim 1 or claim 2, in which the cellular wireless telecommunications network and mobile user terminal operate in accordance with the Universal Mobile Telecommunications System (UMTS) standard.

4. A method according to any of claims 1 to 3, in which the remote server is connected to the wireless telecommunications network via a packet switched network.

5. A method according to any preceding claim, in which the remote server is a webserver, and the call connection is to a website on the webserver to which the user gains access by communicating a user identifier.

6. A method according to claim 5 in which the phone number of the mobile user terminal is looked up in a database from knowledge of the user identifier, and a request for location information of the mobile user terminal is sent to the cellular wireless telecommunications network.

7. A method according to claim 6, in which the request for location information is forwarded to the mobile user terminal which responds with location data obtained by satellite location.

8. A method according to any preceding claim, in which a start point and destination are indicated by the user, and at least part of the route between the start point and destination is shown on the map.

9. A method according to any preceding claim, in which directional instruction messages provided by the webserver are output as audio signals.

10. A cellular wireless telecommunications network including:
a locator to determine the location of a mobile user terminal using a satellite location system,
a remote server in a call connection with the mobile user terminal,
the remote server being operative to process data of the location and data of a map so as to provide a set of data representing the location of the mobile user terminal on the map, and
the remote server being operative to send the set of data to the mobile user terminal for display of the location of the user on the map.
